# EUROPEAN PATENT SPECIFICATION

(11) **EP 4 303 728 B1**
(45) Date of publication and mention of the grant of the patent: **30.10.2024**
(21) Application number: 22183950.9
(22) Date of filing: 08.07.2022
(51) Int. Cl.: G06F 9/54, G06F 16/901, H04L 49/9015

(54) **MULTI-CONSUMER QUEUE**
MEHRFACHVERBRAUCHERWARTESCHLANGE
FILE D'ATTENTE MULTI-CONSOMMATEURS

(43) Date of publication of application: 10.01.2024
(73) Proprietor: Software AG, 64297 Darmstadt (DE)
(72) Inventor: Johnson, Matthew, Littleport, Ely,Cambs CB6 1LZ (GB)
(74) Representative: Sonnenberg Harrison Partnerschaft mbB

(56) References cited:
- US-A1- 2007 156 834
- US-A1- 2016 077 739

## Description

### FIELD OF THE INVENTION

The field of the invention relates to a computer-implemented method for adding an element to a queue by a producing process, a computer-implemented method for removing an element from the queue by a first consuming process, a computer-implemented method for communication between the producing process and at least two consuming processes, a system for communication between the producing process and the at least two consuming processes, the use of the invention for streaming analytics and/or real-time big data analytics, a data processing system comprising means for carrying out the methods and a computer program comprising instructions which, when the program is executed by a computer, cause the computer to carry out the methods.

### BACKGROUND OF THE INVENTION

Multi-threaded software often needs to pass data between threads, for example to reduce the processing time of data processed by the software. One specific reason is that you have some threads producing data (producers) to be consumed by other threads (consumers). This is often implemented as part of a worker-thread model. There are solutions known in the prior art that have a queue or queues with associated mutexes which are locked by the producer(s) to add elements containing data to the queue. The mutexes are also locked by the consumers to remove elements from these queues. Condition variables are used to wake up an idle consumer to consume element from one of these queues.

This solution is sufficient if all consumers are otherwise identical and are able and allowed to consume any element from the queue. Elements having variable processing times can also be handled by these solutions. The consumers process the elements from the queue in order, but there is no guarantee that any given element will be processed completely by a consumer before another consumer starts processing another element from the queue.

Some of the data contained by different elements can have defined interrelations which is why the data from these different elements cannot be processed in any order by random consumers. For example, the data of two elements may need to be processed by the same consumer. Another example for an interrelation is that the data from one element needs to be processed completely before beginning to process the data from a specific other element.

This interrelation could be handled by having the same consumer process the data from the interrelated elements. Other elements in the same queue may, however, have no interrelation with any other element so that they can be processed by any consumer. Elements can alternatively have unrelated dependencies which should be processed with respect to each other but can be processed in parallel to the original pair of elements with dependencies.

There can further be non-homogeneous consumers consuming from the queue. Some elements from the queue may only be processed by a certain subset of consumers while other elements can be processed by all consumers.

A solution to try to solve this problem could be to have one queue per consumer. Producers identify a consumer for every element (regardless of whether an actual interrelation exists) and allocate the element to the queue of this specific consumer. The amount of time a consumer needs to process an element may, however, fluctuate and therefore cannot be predicted in advance. The decision which consumer should process a specific element in advance may not ensure that the first consumer which is available will process this element, in the case that an element can be processed by any or multiple consumers. The producers thus cannot determine in an adequate manner which elements are to be consumed by which consumer. This can lead to both delays in processing elements and priority inversion between elements.

Another solution could be to have one consumer-specific queue per consumer, and an additional queue common to all consumers for elements which can be processed by any consumer. The consumers therefore must choose whether to consume from the consumer-specific queue or the common queue for all consumers. This can also lead to a priority inversion. Consuming from the common queue in preference might leave the elements in the consumer-specific queue unprocessed. Consuming from the consumer-specific queue in preference, on the other hand, can leave the elements in the common queue unprocessed if all consumers have consumer-specific queues. In any case it's likely to lead to delays in processing elements and priority inversion between the queues and element.

Another solution could be to have a single queue and consumers search backwards along the queue to find an element that they are able or allowed to process. There might be many elements in the queue only suitable for other consumers before an appropriate element is found which the searching consumer is able or allowed to process. This turns the queue pop operation from a typically O(1) into an O(n) operation. The queue would typically need to be locked as long as a consumer searches the queue, blocking any other consumers from taking a new element from the queue. This leads to delays in processing elements.

US patent US 101 401 67 B2 describes an information exchange between at least two processes communicating with each other using at least one queue. A placement plan is used for determining the order in which messages are placed into the queue. The information feeding processes place pieces of information into the queue, from where an information consuming process sequentially consumes the pieces of information. The placement plan describes, for at least one possible value of identifying information contained in each of the pieces of information, a respective position in the queue, such that the pieces of information or respective references thereto are placed into the queue according to positions in the queue corresponding to the respective values of the identifying information in the pieces of information.

US patent application US 2021/0303375 A1 describes methods and systems for managing a circular queue, or ring buffer. One method includes storing data from a producer into the ring buffer, and receiving a data read request from a consumer from among a plurality of consumers subscribed to read data from the ring buffer. After obtaining data from a location in the ring buffer in response to the data read request, it is determined if the location has been overrun by the producer. If it is determined that the location has been overrun by the producer, the data is discarded by the consumer. Otherwise, the data is consumed. Depending on the outcome, a miss counter or a read counter may be incremented.

US patent application US 2016/077739 A1 describes a system and method which supports a low contention queue in a multithreaded processing environment such as a distributed data grid.

US patent application US 2007/156834 A1 describes a messaging service that incorporates messages into cached link lists.

The prior art, however, does not disclose a system or method for communication between producers and consumers which sufficiently handles the possible interrelations between elements of the queue and non-homogeneous consumers in an efficient way.

### SUMMARY OF THE INVENTION

The present document describes a computer-implemented method for adding an element to a queue by a producing process. The method comprises the steps of identifying potential consuming processes for processing the element by determining at least a first consuming process from a plurality of consuming processes and providing the element by creating a data item and a plurality of links associated with the data item. The plurality of links comprises at least one first link and the first link comprises a first previous pointer and a first next pointer. The quantity of created links is at least the quantity of potential consuming processes determined in the step of identifying potential consuming processes. The method further comprises the step of integrating the element into the queue by creating or extending a consumer specific doubly-linked list for the first consuming process.

In another aspect of the invention, the step of integrating the element comprises the steps of setting the first next pointer to the same value as a first head pointer of a first root of the queue, if a first tail pointer and/or the first head pointer indicate that the doubly-linked list of the first consuming process is not empty. The first root is a pair of the first head pointer and the first tail pointer. The step of integrating the element further comprises setting the first head pointer to a state which indicates that the element is the head of the doubly-linked list of the first consuming process and setting the first previous pointer to a value indicating that the element is the head of the list, if the first tail pointer or the first head pointer indicate that the doubly-linked list of the first consuming process is not empty. The step of integrating the element further comprises setting a first tail pointer of the first root to a state which indicates that the element is the tail of the doubly-linked list of the first consuming process, if the first tail pointer and/or the first head pointer indicate that the doubly-linked list of the first consuming process is empty. A root is herein considered to be a pair of two pointers, in particular a pair made up of a head pointer and a tail pointer.

In another aspect of the invention, the first previous pointer is set to the null pointer or to the first root.

In another aspect of the invention, the doubly-linked list of the first consuming process is empty if the first tail pointer is the null pointer or points to the first root and/or the first head pointer is the null pointer or points to the first root. In other implementations, it may be indicated in yet different ways that the doubly-linked list of the first consuming process is empty. Those skilled in the arts may decide on a practical convention.

The step of identifying potential consuming processes can further comprise determining at least a second consuming process from a plurality of consuming processes and the plurality of the created links can further comprise at least one second link, comprising a second previous pointer and a second next pointer. The step of integrating the element can comprise integrating the element into the queue by creating or extending a consumer specific doubly-linked list for the second consuming process by the steps of setting the second next pointer to the same value as a second head pointer of a second root of the queue, if a second tail pointer or the second head pointer indicate that the doubly-linked list of the second consuming process is not empty, wherein the second root is a pair of the second head pointer and the second tail pointer and setting the second head pointer to a state which indicates that the element is the head of the doubly-linked list of the second consuming process. The step of integrating the element into the queue can further comprise the steps of setting the second previous pointer to a value indicating that the element is the head of the list, if the second tail pointer or the second head pointer indicate that the doubly-linked list of the second consuming process is not empty and setting a second tail pointer of the second root to a state which indicates that the element is the tail of the doubly-linked list of the second consuming process, if the second tail pointer or the second head pointer indicate that the doubly-linked list of the second consuming process is empty.

In another aspect of the invention, the doubly-linked list of the second consuming process is empty if the second tail pointer is the null pointer or points to the second root and/or the second head pointer is the null pointer or points to the second root. In other implementations, it may be indicated in yet different ways that the doubly-linked list of the second consuming process is empty. Those skilled in the arts may decide on a practical convention.

The computer-implemented method can further comprise locking a mutex before conducting the step of integrating the element and unlocking the mutex after finishing the step of integrating the element.

In another aspect of the invention, the computer-implemented method further comprises waking up idle consuming processes using a condition variable after finishing the step of integrating the element.

The computer-implemented method can further comprise creating a valid, empty queue by creating a first root comprising a first head pointer and a first tail pointer and a second root comprising a second head pointer and a second tail pointer, wherein the first root is a pair of the first head pointer and the first tail pointer and the second root is a pair of the second head pointer and the second tail pointer, wherein the quantity of roots is equal to the quantity of the plurality of consuming processes.

The consumer specific doubly-linked list can comprise at least one element of the queue, wherein the at least one consumer specific doubly-linked list is created or extended by modifying pointers in the queue in dependence of the potential consuming processes which have been identified.

A computer-implemented method for removing an element from a queue by a first consuming process is further described. The method comprises the steps of checking if a first tail pointer and/or a first head pointer indicate that a doubly-linked list of the first consuming process is not empty and eliminating the element from the doubly-linked list of the first consuming process if the doubly-linked list of the first consuming process is not empty. The element is the element the first tail pointer points to, and the element comprises a data item and at least one first link, comprising a first previous pointer for pointing to a first previous element.

In another aspect of the invention, the doubly-linked list of the first consuming process is empty if the first tail pointer is the null pointer or points to the first root and/or the first head pointer is the null pointer or points to the first root, wherein the first root is a pair of the first head pointer and the first tail pointer.

The step of eliminating the element can comprise retrieving the data item and the step of eliminating the element can further comprise freeing the space used to store the element.

The step of eliminating the element can further comprise setting a first next pointer of the first previous element to the first next pointer of the element, if the doubly-linked list of the first consuming process contains the first previous element.

The element can further comprise a second link, comprising a second previous pointer for pointing to a second previous element. The step of eliminating the element can further comprise eliminating the element from a doubly-linked list of the second consuming process by setting a second next pointer of the second previous element to the second next pointer of the element, if the doubly-linked list of the second consuming process contains the second previous element.

A computer-implemented method for communication between a producing process and at least two consuming processes is further described. The method comprises identifying potential consuming processes for processing an element by determining at least a first consuming process from the at least two consuming processes and providing the element by creating a data item and a plurality of links associated with the data item. The plurality of links comprises at least one first link, the first link comprising a first previous pointer and a first next pointer. The quantity of created links is at least the quantity of potential consuming processes determined. The method further comprises integrating the element into a queue by creating or extending a consumer specific doubly-linked list for the first consuming process and checking if a first tail pointer and/or a first head pointer indicate that the doubly-linked list of the first consuming process is not empty. The method further comprises eliminating the element from the doubly-linked list of the first consuming process if the doubly-linked list of the first consuming process is not empty, wherein the element is the element the first tail pointer points to.

A system for communication between a producing process and at least two consuming processes is further described. The system comprises a queue comprising at least a first root and a second root stored in a memory. The quantity of roots is equal to the quantity of consuming processes consuming from the queue and the first root comprises a first head pointer and a first tail pointer and the second root comprises a second head pointer and a second tail pointer, wherein the first root is a pair of the first head pointer and the first tail pointer and the second root is a pair of the second head pointer and the second tail pointer. The system further comprises at least one producer comprising a first processor adapted to run the producing process for adding an element to the queue at least two consumers comprising a second processor adapted to run a first consuming process and a second consuming process for removing an element from the queue.

The use of the computer-implemented methods for adding an element to a queue by a producing process and/or for removing an element from a queue by a first consuming process and/or for communication between a producing process and at least two consuming processes for at least one of streaming analytics and real-time big data analytics is further described.

The computer-implemented methods could also be used when accessing a REST application programming interface (API), where the uniform resource identifier (URI) corresponds to an element (object). If the application issues updates in a certain order, that order must be maintained for updates to the same element. The choice of the potential consumer is determined by mapping a hash of the URI down to a set of consumers, such that all requests to a given element map to the same consumer.

A data processing system comprising means for carrying out the methods for adding an element to a queue by a producing process and/or for removing an element from a queue by a first consuming process and/or for communication between a producing process and at least two consuming processes is further described.

A computer program comprising instructions which, when the program is executed by a computer, cause the computer to carry out the methods for adding an element to a queue by a producing process and/or for removing an element from a queue by a first consuming process and/or for communication between a producing process and at least two consuming processes is further described.

A computer-readable medium comprising instructions which, when executed by a computer, cause the computer to carry out the methods for adding an element to a queue by a producing process and/or for removing an element from a queue by a first consuming process and/or for communication between a producing process and at least two consuming processes is further described.

### DESCRIPTION OF THE FIGURES

FIG. 1 shows a view of a system for communication between a producing process and consuming processes.
FIG. 2 shows a flow chart describing a method for adding the element to the queue by the producing process.
FIG. 3 shows a flow chart describing a method for removing the element from the queue by the first consuming process.
FIG. 4 shows an example for adding elements to a queue by a producing process.
FIG. 5 shows an example for removing elements from the queue.

### DETAILED DESCRIPTION OF THE INVENTION

The invention will now be described on the basis of the figures. It will be understood that the embodiments and aspects of the invention described herein are only examples and do not limit the protective scope of the claims in any way. The invention is defined by the claims.

It will be understood that features of one aspect or embodiment of the invention can be combined with a feature of a different aspect or aspects and/or embodiments of the invention.

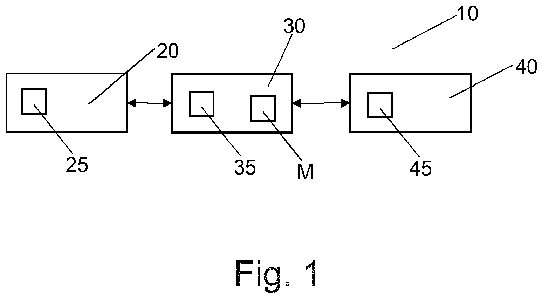

FIG. 1 shows a view of a system 10 for communication between a producing process P or producing thread and consuming processes or consuming threads such as a first consuming process C1 and a second consuming process C2. The system 10 comprises a producer 20, a queue 30 and a consumer 40. The system 10 can additionally comprise more than one producer, more than one consumer and further components.

The producer 20 comprises a first processor 25 which is adapted to run or execute the producing process P. The first processor 25 can be further adapted to run a plurality of producing processes. The Consumer 40 comprises a first processor 45 which is adapted to run or execute the consuming processes C1, C2. The consumer 40 can be further adapted to run a plurality of consuming processes. The consuming processes C1, C2 can alternatively be run on separate processors of the consumer 40 or on processors of separate consumers.

The queue 30 comprises a memory 35 and a mutual exclusion or mutex M. The memory is adapted to store data coming from the producing process P. The producing process P is able to write/read data to/from the memory 35, the consuming processes C1, C2 are able to write/read data to/from the memory 35. The memory 35 can be a memory that is dedicated to the queue 30 only or can be a shared memory, for example, a memory provided for services executed in a cloud-based computer system.

The mutex M is able to prevent ones of the producing process P and the consuming processes C1, C2 to manipulate and/or read data stored in the memory 35 of the queue 30 as soon as the mutex M is locked by one of the producing process P and the consuming processes C1, C2. The mutex M can therefore prevent two processes from manipulating and/or reading the same data in the memory 35 at the same time which could otherwise lead to data inconsistencies.

The producer 20, the queue 30 and the consumer 40 can be separate hardware components or at least one of the producer 20, the queue 30 and the consumer 40 can be implemented on or as common hardware components. At least one of the producer 20, the queue 30 and the consumer 40 can alternatively be implemented as separate or integrated software components adapted to be executed, for example, in one or several cloud-based computer systems. The first processor 25, the memory 35 and the second processor 45 can be dedicated to the producer 20, the queue 30 and the consumer 40 only or can alternatively be shared components such as a processor which is provided for services executed in a cloud-based computer system.

The producer 20 and the queue 30 are able to communicate to allow the producing process P to provide data to the queue 30 and/or to write and/or read data into the memory 35. The consumer 40 and the queue 30 are able to communicate to allow the consuming processes C1, C2 to receive data from the queue 30 and/or to read and/or write data from the memory 35. According to an embodiment, the producer 20 and the consumer 40 may also be able to communicate which each other directly.

The producer 20 can provide data or consumables which are to be processed or consumed by the consuming processes C1, C2. At least one of the consumables can be appropriate for being consumed by all of the consuming processes C1, C2 while at least another one of the consumables can be appropriate for being consumed by specific ones of the consuming processes C1, C2 only.

The queue 30 is a set of roots assigned to ones of the consuming processes C1, C2. The queue 30 comprises a first root R1 for the first consuming process C1 and a second root R2 for the second consuming process C2. The queue 30 can comprise further roots for further consuming processes. The queue 30 comprises a separate root for every consuming process that is able to consume from the queue 30. The quantity of roots of the queue 30 is therefore at least equal to the quantity of consuming processes C1, C2.

A root is herein defined as a pair of a head pointer and a tail pointer. A set of pointers define a linked list and each pointer points to another member of the linked list. The first root R1 comprises a first head pointer H1 and a first tail pointer T1. The second root R2 comprises a second head pointer H2 and a second tail pointer T2.

The queue 30 can further comprise an element E and can alternatively comprise a plurality of elements. The queue 30 can also comprise no element if the queue 30 is empty. The element E comprises a data item D which contains the consumable which is provided by the producing process P, and which is consumed by ones of the consuming processes C1, C2. The element E further comprises a first link EL1 which is a pair of pointers and comprises a first previous pointer EPP1 and a first next pointer ENP1. The element E further comprises a second link EL2 which comprises a second previous pointer EPP2 and a second next pointer ENP2. The quantity of links of the element E is at least the quantity of potential consuming processes for the consumable contained in the data item D of the element E. A potential consuming process for a consumable or data item D or element E is a consuming process that is able and/or allowed to process or consume the consumable or data item D or element E.

Each pair of head and tail pointers forms a valid doubly-linked list for the corresponding consuming process. Each root corresponds to a single consuming process and the corresponding doubly-linked list traverses all elements in the queue 30 using previous/next pointers for which this consuming process is a potential consuming process. The head pointer of a specific doubly-linked list points to the element that was last added to this doubly-linked list. The tail pointer of this doubly-linked list points to the element that was first added to this doubly-linked list.

The first head pointer H1 and the first tail pointer T1 of the first root R1 therefore form the doubly-linked list for the first consuming process C1 and the second head pointer H2 and the second tail pointer T2 of the second root R2 form the doubly-linked list for the second consuming process C2. The queue 30 therefore comprises the doubly-linked list for the first consuming process C1 and the doubly-linked list for the second consuming process C2. The queue 30 can comprise a plurality of doubly-linked lists dependent from the quantity of consuming processes consuming from the queue 30.

The element E can be part of the doubly-linked list for the first consuming process C1 and/or the doubly-linked list for the second consuming process C2, depending on which of the first consuming process C1 and the second consuming process C2 are potential consuming processes for the consumable of the element E. The data item D can be atomically removed with O(1) cost from all of the doubly-linked lists (without needing references to other ones of the lists) when being selected for processing by a specific one of the first consuming process C1 or the second consuming process C2.

The producing process P can add elements with data items to the head of the doubly-linked lists, depending on which of the first consuming process C1 and the second consuming process C2 are potential consuming processes for the data items. One of the consuming processes C1, C2 can consume the data item D of the element E from the tail of its specific doubly-linked list, regardless of what position the element E may hold in the doubly-linked list of the other one of the consuming processes C1, C2. The element E may be consumed by any one of the consuming processes C1, C2 which are potential consuming processes for the element E, but the element E will only be once consumed.

Another extension which this concept permits is to have individual elements removed from the queue 30 without being on either the head or the tail of a doubly-linked list. This can happen independently of either the consuming processes or the producing process, since a reference to the list is not required, only to the element. This would support a use case where an element on the queue 30 could be expired if it became obsolete without being processed.

The producer P can, for example, be a streaming analytics engine for conducting analytics on data of a plurality of internet of things devices. The consumer C can in this example be an internet of things management platform managing the device data. An HTTP/REST interface is provided by the consumer C to exchange data with and query the producer P. The producer P queries the HTTP/REST interface via a connector to HTTP/REST which the producer P can exchange data with. The streaming analytics platform queries multiple requests to the device management platform to provide more throughput concerning analytics.

The HTTP/REST requests from the producer P to the HTTP/REST interface in this example are the elements in the queue. There are defined interrelations between some of those requests and they cannot be processed in any order as it would be the case with a queue and completely homogenous consuming processes. These elements may have a relationship where the same consuming process must process several of these elements. Alternatively, it may be necessary that one element completes processing before beginning to process a specific other element. Other elements in the same queue, however, may have no dependency with any other element and can be processed by any consuming process. These elements may alternatively have unrelated dependencies which must be processed with respect to each other but can be freely processed in parallel to the original pair of elements with dependencies. The same problem occurs if there are non-homogeneous consuming processes and while some elements can be processed by all consuming processes, some can only be processed by a certain subset of the consuming processes.

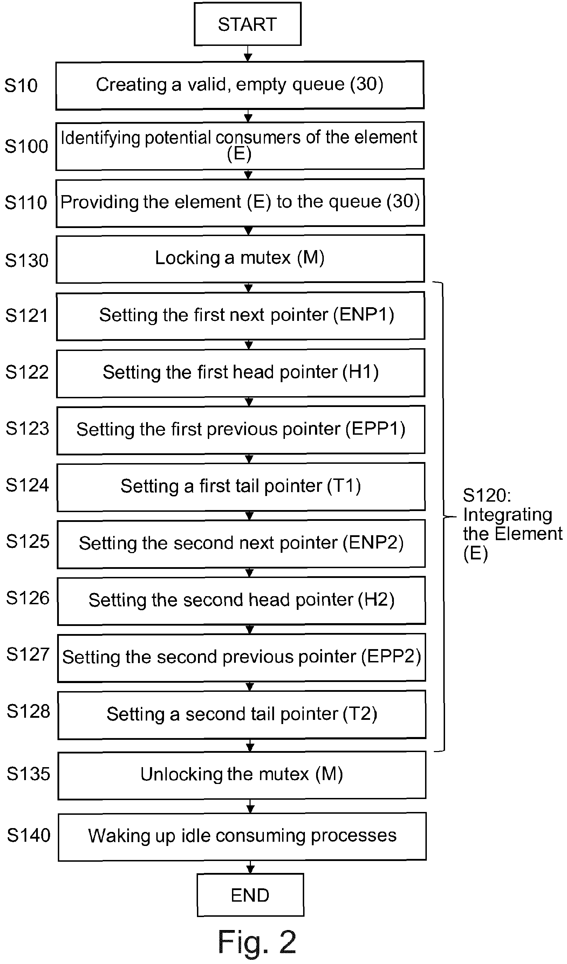

FIG. 2 shows a flow chart describing a method 1 for adding the element E to the queue 30 by the producing process P. The valid, empty queue 30 is created in a step S10 by creating the first root R1 and the second root R2. The first root R1 comprises the first head pointer H1 and the first tail pointer T1 and the second root R2 comprises the second head pointer H2 and the second tail pointer T2. There are two roots R1, R2 created as there are two consuming processes C1, C2 consuming from the queue 30.

The first head pointer H1, the first tail pointer T1, the second head pointer H2 and the second tail pointer T2 are set to values that indicate that the queue 30 is empty. The first head pointer H1 and/or the first tail pointer T1 are set to the null pointer or to point to the first root R1. The second head pointer H2 and/or the second tail pointer T2 are set to the null pointer or to point to the second root R2.

Potential consuming processes for processing the element E are identified in step S100 by determining the first consuming process C1 and the second consuming process C2 from the consuming processes C1, C2. There might, for example, be consumers that have plenty of resources while other consumers have fewer resources or consumers with a particular capability, and others without this capability. The choice of consumer is determined by identifying those consumers which have sufficient resources, or the correct capabilities, to handle the element E. There might also be several elements that need to be processed serially with respect to each other. Only one consuming process could be identified as the potential consuming processes for these elements to ensure serially processing.

The element E is provided in a step S110 by creating the data item D, the first link EL1, and the second link EL2 in the memory 35. The first link EL1 and the second link EL2 are associated with the data item D. The first link EL1 comprises the first previous pointer EPP1 and the first next pointer ENP1, the second link EL2 comprises the second previous pointer EPP2 and the second next pointer ENP2. The consumable is stored in the data item D.

The mutex M is locked in a step S130 before conducting the step of integrating the element E in a step S120, to avoid that the queue 30 is manipulated while integrating the element E. For example one of the consuming processes C1, C2 could remove an element E from the queue 30 and could hence manipulate certain pointers as described for FIG. 2. If this happens at the same time the element E is added to the queue 30 there is the risk of data inconsistency, as adding the element E to the queue 30 also requires manipulation of certain pointers as described in the following. The step S130 could also be conducted at an earlier point in time, for example before step S100 or before step S110. It is however beneficial to lock the mutex as short as possible before the manipulation of pointers for adding the element E is started to reduce the time the queue 30 is locked for editing by other processes and to therefore increase the throughput.

The element E is integrated into the queue 30 in step S120 by creating or extending the consumer specific doubly-linked list for the first consuming process C1 and by creating or extending the consumer specific doubly-linked list for the second consuming process C2. The step S120 comprises steps S121-S128 which are described in more detail in the following.

A check is conducted in a step S121 whether the doubly-linked list of the first consuming process C1 is empty. The doubly-linked list of the first consuming process C1 is empty if the first tail pointer T1 is the null pointer or points to the first root R1 and/or the first head pointer H1 is the null pointer or points to the first root R1. The first next pointer ENP1 is set to the same value as the first head pointer H1 in step S121, if the doubly-linked list of the first consuming process C1 is not empty. This means that the first next pointer ENP1 will point as the next element in the list to an element which was the head of the doubly-linked list of the first consuming process C2 before the element E was to be added. If there was no element in the doubly-linked list of the first consuming process C1 before adding the element E, i.e., the doubly-linked list of the first consuming process C1 was empty, it is not necessary to set the first next pointer ENP1 or the first next pointer ENP1 can alternatively be set to point to the null pointer or to point to the first root R1.

The first head pointer H1 is set to point to the element E or the first link EL1 or any other state which indicates that the element E is the head of the doubly-linked list of the first consuming process C1 in a step S122.

The first previous pointer EPP1 is set to the null pointer or to the first root R1 or to any other value indicating that the element E is the head of the doubly-linked list of the first consuming process C1 in a step S123, if the doubly-linked list of the first consuming process C1 is not empty.

The first tail pointer T1 of the first root R1 is set to the element E or the first link EL1 or to any other state which indicates that the element E is the tail of the doubly-linked list of the first consuming process C1 in a step S124, if the doubly-linked list of the first consuming process C1 is empty. The first tail pointer T1 does not need to be set to a new value if the doubly-linked list of the first consuming process C1 was not empty, as an element that was the tail before adding the element E will stay the tail. The previous pointer of an element which was the head before adding the element E can be set to point to the element E or the first link EL1.

A check is conducted in a step S125 whether the doubly-linked list of the second consuming process C2 is empty. The doubly-linked list of the second consuming process C2 is empty if the second tail pointer T2 is the null pointer or points to the second root R2 and/or the second head pointer H2 is the null pointer or points to the second root R2. The second next pointer ENP2 is set to the same value as the second head pointer H2, if the doubly-linked list of the second consuming process C2 is not empty. This means that the second next pointer ENP2 will point as the next element in the list to an element which was the head of the doubly-linked list of the second consuming process C2 before the element E was to be added. If there was no element in the doubly-linked list of the second consuming process C2 before adding the element E, i.e., the doubly-linked list of the second consuming process C2 was empty, it is not necessary to set the second next pointer ENP2 or the second next pointer ENP2 can alternatively be set to point to the null pointer or to point to the second root R2.

The second head pointer H2 is set to point to the element E or the second link EL2 or any other state which indicates that the element E is the head of the doubly-linked list of the second consuming process C2 in a step S126.

The second previous pointer EPP2 is set to the null pointer or to the second root R2 or to any other value indicating that the element E is the head of the doubly-linked list of the second consuming process C2 in a step S127, if the doubly-linked list of the second consuming process C2 is not empty.

The second tail pointer T2 of the second root R2 is set to the element E or the second link EL2 or to any other state which indicates that the element E is the tail of the doubly-linked list of the second consuming process C2 in a step S128, if the doubly-linked list of the second consuming process C2 is empty. The second tail pointer T2 does not need to be set to a new value if the doubly-linked list of the second consuming process C2 was not empty, as an element that was at the tail before adding the element E will remain at the tail. The previous pointer of an element which was the head before adding the element E can be set to point to the element E or the second link EL2.

The mutex M is unlocked in a step 135 after finishing the step of integrating S120 the element E. Other processes are then able to manipulate pointers of the queue 30 and elements can be removed from the queue 30 or new elements can be added to the queue 30.

Idle consuming processes are woken up in a step S140 using a condition variable after finishing the steps of integrating S120 the element E and unlocking S135 the mutex. The first consuming process C1 can, for example, switch to an idle state if the consuming process C1 has finished a data processing task and if there is no further element in the doubly-linked list of this consuming process (if the list is empty). The first consuming process C1 is woken up using a condition variable, as soon as the element E has been integrated into the queue 30, as the first consuming process C1 is a potential consuming process for the element E. The first consuming process C1 can then consume the element E. Consuming processes which are in an idle state thus need not regularly check if there is a new element in their doubly-link lists, because they are actively woken up using the condition variables.

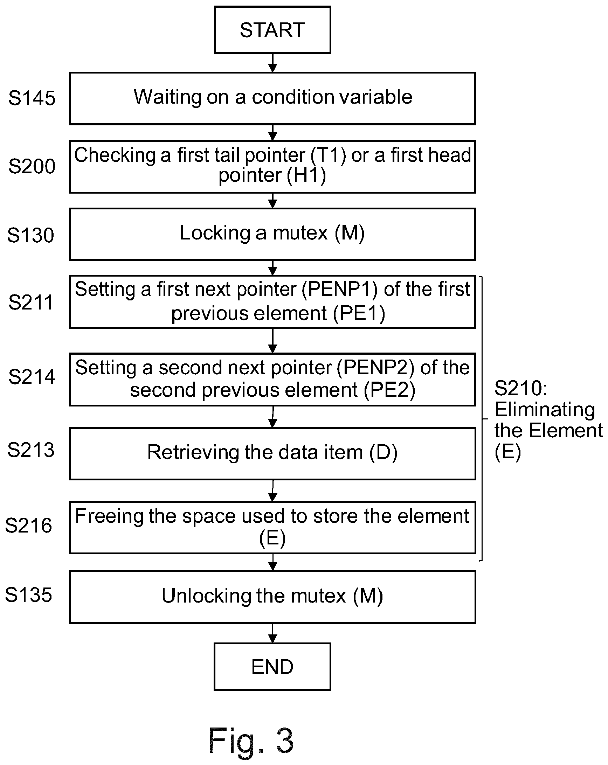

By setting first next pointer ENP1, the first head pointer H1, the first previous pointer EPP1 and the first tail pointer T1 in steps S121 - S124 the element E has been integrated into the doubly-linked list of the first consuming process C1 and may from now on be consumed by the first consuming process C 1. The element E has also been integrated into the doubly-linked list of the second consuming process C2 by setting second next pointer ENP2, the second head pointer H2, the second previous pointer EPP2 and the second tail pointer T2 in steps 125-128, as the second consuming process C2 has also been determined as a potential consuming process for the element E in step S100. The element E may therefore be consumed either by the first consuming process C1 or the second consuming process. The method for removing the element E from the doubly linked lists if the element E is consumed will be described with FIG. 3.

An optional performance improvement has the first root R1 and the second root R2 allocated in a single allocation with the mutex M and condition variable using custom memory allocation. This improves constant-time behavior of the queue 30, primarily through improved memory caching (all roots are guaranteed to be in a single cache line).

The producing process P can produce multiple elements in batches to signal once all elements in the batch are added to the queue 30 as a further optional optimization.

Further elements can be added to the queue 30 according to the method 1 for adding an element to the queue 30. An element for which only the first consuming process C1 is a potential consuming process, and which is added to the queue 30 after adding the element E and before adding any other element for which the first consuming process C1 is a potential consuming process will be part of the doubly linked list of the first consuming process C1 previous to the element E. This element will further be called first previous element P1. An element for which only the second consuming process C2 is a potential consuming process, and which is added to the queue 30 after adding the element E and before adding any other element for which the second consuming process C2 is a potential consuming process will be part of the doubly linked list of the second consuming process C2 previous to the element E. This element will further be called second previous element P2.

FIG. 3 shows a flow chart describing a method 2 for removing the element E from the queue 30 by the first consuming process C1. A check is conducted in a step S200 if the first tail pointer T1 and/or the first head pointer H1 indicate that the doubly-linked list of the first consuming process C1 contains at least one element / is not empty. The doubly-linked list of the first consuming process C1 is not empty if the first tail pointer T1 is neither the null pointer nor points to the first root R1 and/or the first head pointer H1 is neither the null pointer nor points to the first root R1.

The step S200 is conducted by the first consuming process after finishing a previous processing task. The first consuming process C1 can alternatively wait on a condition variable to wake to first consuming process C1 if the first consuming process C1 is in an idle state.

Step S130 is conducted again to lock the mutex M before eliminating the element E in a step S210, to avoid that the queue 30 is manipulated while eliminating the element E. The step S130 could also be conducted at an earlier point in time, for example before step S200. It is however beneficial to lock the mutex as short as possible before the manipulation of pointers for removing the element E is started to reduce the time the queue 30 is locked for editing by other processes and to therefore increase the throughput.

The element E is eliminated from the doubly-linked list of the first consuming process C1 in step S210 if the doubly-linked list of the first consuming process C1 is not empty, wherein the element E is the element the first tail pointer T1 points to. The step S210 comprises steps S211, S213, S214, and S216 which are described in more detail in the following.

The data item D of the element E and/or the consumable stored in the data item D is retrieved in step S213. The first consuming process C1 can thus further process the consumable. The first link EL1 of the element E could comprise a further pointer which points to the start of the element E to facilitate locating the data item D in the memory 35.

The space in the memory 35 used to store the element E is made free in step S216 so that this space can be used for future elements which might be added to the queue 30 and to provide a memory-efficient implementation of the queue 30.

A first next pointer PE1NP1 of the first previous element PE1 is set to the first next pointer ENP1 of the element E, if the doubly-linked list of the first consuming process C1 contains the first previous element PE1. This step can be omitted if the element E is the only element on the doubly-linked list of the first consuming process C1. The first tail pointer T1 can further be set to the first previous element PE1 or the first link PE1L1 of the first previous element PE1 to indicate that the first previous element is the new tail of the doubly-linked list of the first consuming process C1 after removing the element E.

The first head pointer H1 can further be set to a value that indicates that the doubly-linked list of the first consuming process C1 is empty if the element E was the only element in the doubly-linked list of the first consuming process C1. The first head pointer H1 can be set to the null pointer or to point to the first root R1 in this case.

The element E is further eliminated from the doubly-linked list of the second consuming process C2 to avoid the second consuming process C2 trying to consume the element E as well in the future. A second next pointer PE2NP2 of the second previous element PE2 is set to the second next pointer ENP2 of the element E, if the doubly-linked list of the second consuming process C2 contains the second previous element PE2. This step can be omitted if the element E is the only element on the doubly-linked list of the second consuming process C2. The second tail pointer T2 can further be set to the second previous element PE2 or the second link PE2L2 of the second previous element PE2 to indicate that the second previous element is the new tail of the doubly-linked list of the second consuming process C2 after removing the element E.

The second head pointer H2 can further be set to a value that indicates that the doubly-linked list of the second consuming process C2 is empty if the element E was the only element in the doubly-linked list of the second consuming process C2. The second head pointer H2 can be set to the null pointer or to point to the second root R2 in this case.

If the element E would be part of a doubly-linked list of further consuming processes, the element E would need to be eliminated from these lists as well.

The step S135 is conducted again to unlock the mutex M after finishing the step of eliminating S210 the element E. Other processes are then able to manipulate pointers of the queue 30 and elements can be removed from the queue 30 or new elements can be added to the queue 30.

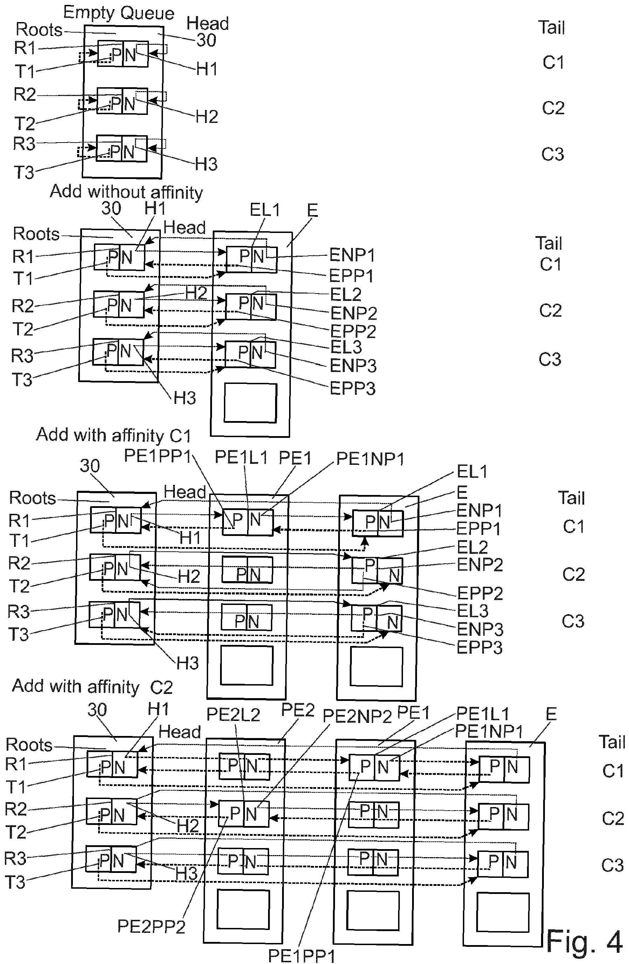

FIG. 4 shows an example for adding elements to a queue 30 by a producing process P. The queue 30 comprises three roots, one for each of three consuming processes. A first root R1 for a first consuming process C1, a second root R2 for a second consuming process C2 and third root R3 for a third consuming process C3. The first root R1 comprises a first head pointer H1 and a first tail pointer T1, the second root R2 comprises a second head pointer H2 and a second tail pointer T2 and the third root R3 comprises a third head pointer H3 and a third tail pointer T3. The queue 30 is empty at the beginning, which is why the first head pointer H1 and the first tail pointer T1 point to the first root R1, the second head pointer H2 and the second tail pointer T2 point to the second root R2 and the third head pointer H3 and the third tail pointer T3 point to the third root R3.

An element E is added to the queue 30 by the producing process P by manipulating several pointer as described in the following. All three consuming processes C1, C2, C3 are potential consuming processes for the element E. The element E is therefore added to the doubly-linked lists of all three consuming processes C1, C2, C3 (without affinity for specific consuming processes). The element E comprises a data item D, a first link EL1 comprising a first next pointer ENP1 and a first previous pointer EPP1, a second link EL2 comprising a second next pointer ENP2 and a second previous pointer EPP2 and a third link EL3 comprising a third next pointer ENP3 and a third previous pointer EPP3.

The element E is integrated into the doubly-linked list of the first consuming process C1 by setting the first head pointer H1 and the first tail pointer T1 to point to the element E and by setting the first next pointer ENP1 and the first previous pointer EPP1 to point to the first root R1. The element E is now part of the doubly-linked list of the first consuming process C1 and is the head and the tail of this list.

The element E is integrated into the doubly-linked list of the second consuming process C2 by setting the second head pointer H2 and the second tail pointer T2 to point to the element E and by setting the second next pointer ENP2 and the second previous pointer EPP2 to point to the second root R2. The element E is now part of the doubly-linked list of the second consuming process C2 and is the head and the tail of this list.

The element E is integrated into the doubly-linked list of the third consuming process C3 by setting the third head pointer H3 and the third tail pointer T3 to point to the element E and by setting the third next pointer ENP3 and the third previous pointer EPP3 to point to the third root R3. The element E is now part of the doubly-linked list of the third consuming process C3 and is the head and the tail of this list.

A first previous element PE1 is further added to the queue 30 by the producing process P by manipulating several pointers as described in the following. Only the first consuming process C1 is a potential consuming processes for the first previous element PE1. The first previous element PE1 is therefore added to the doubly-linked list of the first consuming process C1 only (with affinity for the first consuming process C1). The first previous element PE1 comprises a data item D and at least a first link PE1L1 comprising a first next pointer PE1NP1 and a first previous pointer PE1PP1.

The first previous element PE1 is integrated into the doubly-linked list of the first consuming process C1 by setting the first head pointer H1 to point to the first previous element PE1, by setting the first previous pointer EPP1 to point to the first previous element PE1, by setting the first next pointer PE1NP1 to point to the element E and by setting the first previous pointer PE1PP1 to point to the first root R1. The first previous element PE1 is now part of the doubly-linked list of the first consuming process C1 and is the head of this list, while the element E remains the tail of this list. The doubly-linked list of the first consuming process C1 now contains the first previous element PE1 and the element E.

A second previous element PE2 is further added to the queue 30 by the producing process P by manipulating several pointers as described in the following. Only the second consuming process C2 is a potential consuming processes for the second previous element PE2. The second previous element PE2 is therefore added to the doubly-linked list of the second consuming process C2 only (with affinity for the second consuming process C2). The second previous element PE2 comprises a data item D and at least a second link PE2L2 comprising a second next pointer PE2NP2 and a second previous pointer PE2PP2.

The second previous element PE2 is integrated into the doubly-linked list of the second consuming process C2 by setting the second head pointer H2 to point to the second previous element PE2, by setting the second previous pointer EPP2 to point to the second previous element PE2, by setting the second next pointer PE2NP2 to point to the element E and by setting the second previous pointer PE2PP2 to point to the second root R2. The second previous element PE2 is now part of the doubly-linked list of the second consuming process C2 and is the head of this list, while the element E remains the tail of this list. The doubly-linked list of the second consuming process C2 now contains the second previous element PE2 and the element E.

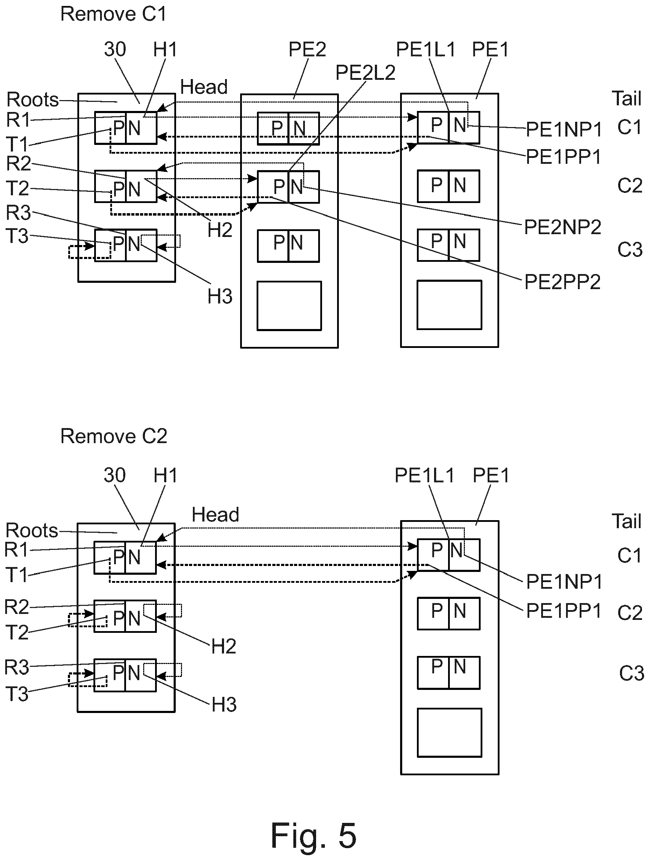

FIG. 5 shows an example for removing elements from the queue 30. The element E is removed from the queue 30 by the first consuming process C1 by manipulating several pointers as described in the following. The element E is eliminated from the doubly-linked lists of all three consuming processes C1, C2, C3 as all three consuming processes C1, C2, C3 are potential consuming processes for the element E and the element E is therefore part of the doubly-linked lists of all three consuming processes C1, C2, C3.

The element E is eliminated from the doubly-linked list of the first consuming process C1 by setting the first tail pointer T1 to point to the first previous element PE1 and by setting the first next pointer PE1NP1 to point to the first root R1. The element E is no longer part of the doubly-linked list of the first consuming process C1. This list now only contains the first previous element PE1, which is the head and the tail of this list.

The element E is eliminated from the doubly-linked list of the second consuming process C2 by setting the second tail pointer T2 to point to the second previous element PE2 and by setting the second next pointer PE2NP2 to point to the second root R2. The element E is no longer part of the doubly-linked list of the second consuming process C2. This list now only contains the second previous element PE2, which is the head and the tail of this list.

The element E is eliminated from the doubly-linked list of the third consuming process C3 by setting the third head pointer H3 and the third tail pointer T3 to point to the third root R1. The element E is no longer part of the doubly-linked list of the third consuming process C3. This list is now empty.

The second previous element PE2 is further removed from the queue 30 by the second consuming process C2 by manipulating several pointers as described in the following. The second previous element PE2 is eliminated from the doubly-linked list of the second consuming process C2 only, as only the second consuming process C2 is a potential consuming processes for the second previous element PE2 and the second previous element PE2 is therefore part of the doubly-linked lists of the second consuming process C2 only.

The second previous element PE2 is eliminated from the doubly-linked list of the second consuming process C2 by setting the second head pointer H2 and the second tail pointer T2 to point to the second root R2. The second previous element PE2 is no longer part of the doubly-linked list of the second consuming process C2. This list is now empty.

The steps of the methods described in this application can be executed in a sequence differing from the sequence which was chosen to illustrate the methods in the figures and that was described in the description.

### Reference numerals

- 1: computer-implemented method
- 2: computer-implemented method
- 3: computer-implemented method
- 10: system
- 20: producer
- 25: first processor
- 30: queue
- 35: memory
- 40: consumer
- 45: second processor
- P: producing process
- C1: first consuming process
- C2: second consuming process
- C3: third consuming process
- D: data item
- E: element
- M: Mutex
- EL1: first link
- EL 2: second link
- EL3: third link
- EPP1: first previous pointer of the element
- EPP2: second previous pointer of the element
- EPP3: third previous pointer of the element
- ENP1: first next pointer of the element
- ENP2: second next pointer of the element
- ENP3: third next pointer of the element
- PE1: first previous element
- PE2: second previous element
- PE1L1: first link of first previous element
- PE2L2: second link of second previous element
- PE1NP1: first next pointer of the first previous element
- PE1PP1: first previous pointer of the first previous element
- PE2NP2: second next pointer of the second previous element
- PE2PP2: second previous pointer of the second previous element
- H1: first head pointer
- H2: second head pointer
- H3: third head pointer
- R1: first root
- R2: second root
- R3: third root
- T1: first tail pointer
- T2: second tail pointer
- T3: third tail pointer

- S10: creating a valid, empty queue
- S100: identifying potential consumers
- S110: providing an element
- S120: integrating the element
- S121: setting the first next pointer
- S122: setting the first head pointer
- S123: setting the first previous pointer
- S124: setting a first tail pointer
- S125: setting the second next pointer
- S126: setting the second head pointer
- S127: setting the second previous pointer
- S128: setting a second tail pointer

- S130: locking a mutex
- S135: unlocking the mutex

- S140: waking up idle consuming processes
- S145: waiting on a condition variable
- S200: checking a first tail pointer or a first head pointer
- 5210: eliminating the element
- S211: setting a first previous pointer of the first previous element
- S213: retrieving the data item
- 5214: setting a second previous pointer of the second previous element
- S216: Freeing the space used to store the element

## Claims

1. A computer-implemented method (1) for adding an element (E) to a queue (30) by a producing process (P), the method comprising the steps of:
identifying (S100) potential consuming processes for processing the element (E) by determining at least a first consuming process (C1) from a plurality of consuming processes (C1, C2);
providing (S 110) the element (E) by creating a data item (D) and a plurality of links associated with the data item (D), the plurality of links comprising at least one first link (EL1), the first link (EL1) comprising a first previous pointer (EPP1) and a first next pointer (ENP1), wherein the quantity of created links is at least the quantity of potential consuming processes determined in step (S100); and
integrating (S120) the element (E) into the queue (30) by creating or extending a consumer specific doubly-linked list for the first consuming process (C1).

2. The computer-implemented method (1) according to claim 1, wherein the step of integrating (S120) the element (E) comprises the steps of:
setting (S121) the first next pointer (ENP1) to the same value as a first head pointer (H1) of a first root (R1) of the queue (30), if a first tail pointer (T1) and/or the first head pointer (H1) indicate that the doubly-linked list of the first consuming process (C1) is not empty, wherein the first root (R1) is a pair of the first head pointer (H1) and the first tail pointer (T1);
setting (S122) the first head pointer (H1) to a state which indicates that the element (E) is the head of the doubly-linked list of the first consuming process (C1);
setting (S123) the first previous pointer (EPP1) to a value indicating that the element (E) is the head of the list, if the first tail pointer (T1) or the first head pointer (H1) indicate that the doubly-linked list of the first consuming process (C1) is not empty; and
setting (S124) a first tail pointer (T1) of the first root (R1) to a state which indicates that the element (E) is the tail of the doubly-linked list of the first consuming process (C1), if the first tail pointer (T1) and/or the first head pointer (H1) indicate that the doubly-linked list of the first consuming process (C1) is empty.

3. The computer-implemented method (1) according to claim 2, wherein
the first previous pointer (EPP1) is set to the null pointer or to the first root (R1).

4. The computer-implemented method (1) according to claims 2 or 3, wherein the doubly-linked list of the first consuming process (C1) is empty if
the first tail pointer (T1) is the null pointer or points to the first root (R1); and/or
the first head pointer (H1) is the null pointer or points to the first root (R1).

5. The computer-implemented method (1) according to claims 1 to 3, wherein
the step of identifying (S100) potential consuming processes further comprises determining at least a second consuming process (C2) from a plurality of consuming processes (C1, C2);
the plurality of the created links further comprises at least one second link (EL2), comprising a second previous pointer (EPP2) and a second next pointer (ENP2); and
the step of integrating (S120) the element (E) comprises integrating the element (E) into the queue (30) by creating or extending a consumer specific doubly-linked list for the second consuming process (C2) by the steps of:
setting (S125) the second next pointer (ENP2) to the same value as a second head pointer (H2) of a second root (R2) of the queue (30), if a second tail pointer (T2) or the second head pointer (H2) indicate that the doubly-linked list of the second consuming process (C2) is not empty, wherein the second root (R2) is a pair of the second head pointer (H2) and the second tail pointer (T2);
setting (S126) the second head pointer (H2) to a state which indicates that the element (E) is the head of the doubly-linked list of the second consuming process (C2);
setting (S127) the second previous pointer (EPP2) to a value indicating that the element (E) is the head of the list, if the second tail pointer (T2) or the second head pointer (H2) indicate that the doubly-linked list of the second consuming process (C2) is not empty; and
setting (S128) a second tail pointer (T2) of the second root (R2) to a state which indicates that the element (E) is the tail of the doubly-linked list of the second consuming process (C2), if the second tail pointer (T2) or the second head pointer (H2) indicate that the doubly-linked list of the second consuming process (C2) is empty.

6. The computer-implemented method (1) according to claim 5, wherein the doubly-linked list of the second consuming process (C2) is empty if
the second tail pointer (T2) is the null pointer or points to the second root (R2); and/or
the second head pointer (H2) is the null pointer or points to the second root (R2).

7. The computer-implemented method (1) according to claims 1 to 6, further comprising
locking (S130) a mutex (M) before conducting the step of integrating (S120) the element (E); and
unlocking (S135) the mutex (M) after finishing the step of integrating (S120) the element (E).

8. The computer-implemented method (1) according to claims 1 to 7, further comprising
waking up (S140) idle consuming processes using a condition variable after finishing the step of integrating (S120) the element (E).

9. The computer-implemented method (1) according to claims 1 to 8, further comprising:
creating (S 10) a valid, empty queue (30) by creating a first root (R1) comprising a first head pointer (H1) and a first tail pointer (T1) and a second root (R2) comprising a second head pointer (H2) and a second tail pointer (T2), wherein the first root (R1) is a pair of the first head pointer (H1) and the first tail pointer (T1) and the second root (R2) is a pair of the second head pointer (H2) and the second tail pointer (T2), wherein the quantity of roots is equal to the quantity of the plurality of consuming processes (C1, C2).

10. The computer-implemented method (1) according to claims 1 to 8, wherein the consumer specific doubly-linked list comprises at least one element of the queue (30), wherein the at least one consumer specific doubly-linked list is created or extended by modifying pointers in the queue (30) in dependence of the potential consuming processes which have been identified in step (S100).

11. A computer-implemented method (2) for removing an element (E) from a queue (30) by a first consuming process (C1), the method comprising the steps of:
checking (S200) if a first tail pointer (T1) and/or a first head pointer (H1) indicate that a doubly-linked list of the first consuming process (C1) is not empty; and
eliminating (S210) the element (E) from the doubly-linked list of the first consuming process (C1) if the doubly-linked list of the first consuming process (C1) is not empty, wherein the element (E) is the element the first tail pointer (T1) points to and the element (E) comprises a data item (D) and at least one first link (EL1), comprising a first previous pointer (EPP1) for pointing to a first previous element (PE1).

12. The computer-implemented method (2) according to claim 11, wherein the doubly-linked list of the first consuming process (C1) is empty if
the first tail pointer (T1) is the null pointer or points to the first root (R1); and/or
the first head pointer (H1) is the null pointer or points to the first root (R1), wherein the first root (R1) is a pair of the first head pointer (H1) and the first tail pointer (T1).

13. The computer-implemented method (2) according to claims 11 and 12, wherein the step of eliminating (S210) the element (E) comprises retrieving (S213) the data item (D).

14. The computer-implemented method (2) according to claims 11 to 13, wherein the step of eliminating (S210) the element (E) further comprises freeing (S216) the space used to store the element (E).

15. The computer-implemented method (2) according to claims 11 to 14, wherein the step of eliminating (S210) the element (E) further comprises setting (S211) a first next pointer (PE1NP1) of the first previous element (PE1) to the first next pointer (ENP1) of the element (E), if the doubly-linked list of the first consuming process (C1) contains the first previous element (PE1).

16. The computer-implemented method (2) according to claims 11 to 15, wherein
the element (E) further comprises a second link (EL2), comprising a second previous pointer (EPP2) for pointing to a second previous element (PE2); and
the step of eliminating (S210) the element (E) further comprises eliminating the element (E) from a doubly-linked list of the second consuming process (C2) by setting (S214) a second next pointer (PE2NP2) of the second previous element (PE2) to the second next pointer (ENP2) of the element (E), if the doubly-linked list of the second consuming process (C2) contains the second previous element (PE2).

17. A computer-implemented method (3) for communication between a producing process (P) and at least two consuming processes (C1, C2), the method (3) comprising:
identifying (S100) potential consuming processes for processing an element (E) by determining at least a first consuming process (C1) from the at least two consuming processes (C1, C2);
providing (S 110) the element (E) by creating a data item (D) and a plurality of links associated with the data item (D), the plurality of links comprising at least one first link (EL1), the first link (EL1) comprising a first previous pointer (EPP1) and a first next pointer (ENP1), wherein the quantity of created links is at least the quantity of potential consuming processes determined in step (S100);
integrating (S 120) the element (E) into a queue (30) by creating or extending a consumer specific doubly-linked list for the first consuming process (C1);
checking (S200) if a first tail pointer (T1) and/or a first head pointer (H1) indicate that the doubly-linked list of the first consuming process (C1) is not empty; and
eliminating (S210) the element (E) from the doubly-linked list of the first consuming process (C1) if the doubly-linked list of the first consuming process (C1) is not empty, wherein the element (E) is the element the first tail pointer (T1) points to.

18. A system (10) for communication between a producing process (P) and at least two consuming processes (C1, C2), the system (10) comprising:
a queue (30) comprising at least a first root (R1) and a second root (R2) stored in a memory (35), wherein
the quantity of roots is equal to the quantity of consuming processes consuming from the queue (30);
the first root (R1) comprises a first head pointer (H1) and a first tail pointer (T1) and the second root (R2) comprises a second head pointer (H2) and a second tail pointer (T2), wherein the first root (R1) is a pair of the first head pointer (H1) and the first tail pointer (T1) and the second root (R2) is a pair of the second head pointer (H2) and the second tail pointer (T2);
at least one producer (20) comprising a first processor (25) adapted to run the producing process (P) according to claims 1 to 10 for adding an element (E) to the queue (30); and
at least two consumers (40) comprising a second processor (45) adapted to run a first consuming process (C1) and a second consuming process (C2) according to claims 11 to 16 for removing an element (E) from the queue (30).

19. Use of the methods (1) and/or (2) and/or (3) of any one of claims 1-17 for at least one of streaming analytics and real-time big data analytics.

20. A data processing system comprising means for carrying out the methods (1) and/or (2) and/or (3) of any one of claims 1-17.

21. A computer program comprising instructions which, when the program is executed by a computer, cause the computer to carry out the methods (1) and/or (2) and/or (3) of any one of claims 1-17.

22. A computer-readable medium comprising instructions which, when executed by a computer, cause the computer to carry out the methods (1) and/or (2) and/or (3) of any one of claims 1-17.

## Patentansprüche

1. Computerimplementiertes Verfahren (1) zum Hinzufügen eines Elements (E) zu einer Warteschlange (30) durch einen Produktionsprozess (P), das Verfahren umfassend die folgenden Schritte:
Identifizieren (S100) potenzieller Verbrauchsprozesse zum Verarbeiten des Elements (E) durch Bestimmen mindestens eines ersten Verbrauchsprozesses (C1) von einer Vielzahl von Verbrauchsprozessen (C1, C2);
Bereitstellen (S1 10) des Elements (E) durch Erzeugen eines Datenobjekts (D) und einer Vielzahl von Verknüpfungen, assoziiert mit dem Datenobjekt (D), wobei die Vielzahl von Verknüpfungen mindestens eine erste Verknüpfung (EL1) umfasst, wobei die erste Verknüpfung (EL1) einen ersten vorherigen Zeiger (EPP1) und einen ersten nächsten Zeiger (ENP1) umfasst, wobei die Menge von erzeugten Verknüpfungen mindestens die Menge von potenziellen Verbrauchsprozessen ist, bestimmt in Schritt (S100); und
Integrieren (S120) des Elements (E) in die Warteschlange (30) durch Erzeugen oder Erweitern einer verbrauchsspezifischen doppelverknüpften Liste für den ersten Verbrauchsprozess (C1).

2. Computerimplementiertes Verfahren (1) nach Anspruch 1, bei welchem der Schritt des Integrierens (S120) des Elements (E) die folgenden Schritte umfasst:
Einstellen (S121) des ersten nächsten Zeigers (ENP1) auf den gleichen Wert wie ein erster Kopfzeiger (H1) eines ersten Verzeichnisses (R1) der Warteschlange (30), falls ein erster Schlusszeiger (T1) und/oder der erste Kopfzeiger (H1) anzeigen, dass die doppelverknüpfte Liste des ersten Verbrauchsprozesses (C1) nicht leer ist, wobei das erste Verzeichnis (R1) ein Paar von dem ersten Kopfzeiger (H1) und dem ersten Schlusszeiger (T1) ist;
Einstellen (S122) des ersten Kopfzeigers (H1) auf einen Zustand, der anzeigt, dass das Element (E) der Kopf der doppelverknüpften Liste des ersten Verbrauchsprozesses (C1) ist;
Einstellen (S123) des ersten vorherigen Zeigers (EPP1) auf einen Wert, der anzeigt, dass das Element (E) der Kopf der Liste ist, falls der erste Schlusszeiger (T1) oder der erste Kopfzeiger (H1) anzeigen, dass die doppelverknüpfte Liste des ersten Verbrauchsprozesses (C1) nicht leer ist; und
Einstellen (S124) eines ersten Schlusszeigers (T1) des ersten Verzeichnisses (R1) auf einen Zustand, der anzeigt, dass das Element (E) der Schluss der doppelverknüpften Liste des ersten Verbrauchsprozesses (C1) ist, falls der erste Schlusszeiger (T1) und/oder der erste Kopfzeiger (H1) anzeigen, dass die doppelverknüpfte Liste des ersten Verbrauchsprozesses (C1) leer ist.

3. Computerimplementiertes Verfahren (1) nach Anspruch 2, bei welchem der erste vorherige Zeiger (EPP1) auf den Null-Zeiger oder auf das erste Verzeichnis (R1) eingestellt ist.

4. Computerimplementiertes Verfahren (1) nach Ansprüche 2 oder 3, bei welchem die doppelverknüpfte Liste des ersten Verbrauchsprozesses (C1) leer ist, falls
der erste Schlusszeiger (T1) der Null-Zeiger ist oder auf das erste Verzeichnis (R1) zeigt; und/oder
der erste Kopfzeiger (H1) der Null-Zeiger ist oder auf das erste Verzeichnis (R1) zeigt.

5. Computerimplementiertes Verfahren (1) nach einem der Ansprüche 1 bis 3, bei welchem
der Schritt des Identifizierens (S100) potenzieller Verbrauchsprozesse ferner ein Bestimmen mindestens eines zweiten Verbrauchsprozesses (C2) von einer Vielzahl von Verbrauchsprozessen (C1, C2) umfasst;
die Vielzahl der erzeugten Verknüpfungen ferner mindestens eine zweite Verknüpfung (EL2) umfasst, die einen zweiten vorherigen Zeiger (EPP2) und einen zweiten nächsten Zeiger (ENP2) umfasst; und
der Schritt des Integrierens (S120) des Elements (E) ein Integrieren des Elements (E) in die Warteschlange (30) durch Erzeugen oder Erweitern einer verbrauchsspezifischen doppelverknüpften Liste für den zweiten Verbrauchsprozess (C2) umfasst durch die folgenden Schritte:
Einstellen (S 125) des zweiten nächsten Zeigers (ENP2) auf den gleichen Wert wie ein zweiter Kopfzeiger (H2) eines zweiten Verzeichnisses (R2) der Warteschlange (30), falls ein zweiter Schlusszeiger (T2) oder der zweite Kopfzeiger (H2) anzeigen, dass die doppelverknüpfte Liste des zweiten Verbrauchsprozesses (C2) nicht leer ist, wobei das zweite Verzeichnis (R2) ein Paar von dem zweiten Kopfzeiger (H2) und dem zweiten Schlusszeiger (T2) ist;
Einstellen (S126) des zweiten Kopfzeigers (H2) auf einen Zustand, der anzeigt, dass das Element (E) der Kopf der doppelverknüpften Liste des zweiten Verbrauchsprozesses (C2) ist;
Einstellen (S127) des zweiten vorherigen Zeigers (EPP2) auf einen Wert, der anzeigt, dass das Element (E) der Kopf der Liste ist, falls der zweite Schlusszeiger (T2) oder der zweite Kopfzeiger (H2) anzeigen, dass die doppelverknüpfte Liste des zweiten Verbrauchsprozesses (C2) nicht leer ist; und
Einstellen (S 128) eines zweiten Schlusszeigers (T2) des zweiten Verzeichnisses (R2) auf einen Zustand, der anzeigt, dass das Element (E) der Schluss der doppelverknüpften Liste des zweiten Verbrauchsprozesses (C2) ist, falls der zweite Schlusszeiger (T2) oder der zweite Kopfzeiger (H2) anzeigen, dass die doppelverknüpfte Liste des zweiten Verbrauchsprozesses (C2) leer ist.

6. Computerimplementiertes Verfahren (1) nach Anspruch 5, bei welchem die doppelverknüpfte Liste des zweiten Verbrauchsprozesses (C2) leer ist, falls
der zweite Schlusszeiger (T2) der Null-Zeiger ist oder auf das zweite Verzeichnis (R2) zeigt; und/oder
der zweite Kopfzeiger (H2) der Null-Zeiger ist oder auf das zweite Verzeichnis (R2) zeigt.

7. Computerimplementiertes Verfahren (1) nach einem der Ansprüche 1 bis 6, ferner umfassend
Sperren (S130) eines Mutex (M) bevor eines Durchführens des Schritts des Integrierens (S120) des Elements (E); und
Aufheben (S135) des Mutex (M) nach Beenden des Schritts des Integrierens (S120) des Elements (E).

8. Computerimplementiertes Verfahren (1) nach einem der Ansprüche 1 bis 7, ferner umfassend
Aufwecken (S140) von leerlaufenden Verbrauchsprozessen unter Verwendung einer Bedingungsvariabel nach Beenden des Schritts des Integrierens (S120) des Elements (E).

9. Computerimplementiertes Verfahren (1) nach einem der Ansprüche 1 bis 8, ferner umfassend:
Erzeugen (S10) einer validen, leeren Warteschlange (30) durch Erzeugen eines ersten Verzeichnisses (R1), umfassend einen ersten Kopfzeiger (H1) und einen ersten Schlusszeiger (T1), und eines zweiten Verzeichnisses (R2), umfassend einen zweiten Kopfzeiger (H2) und einen zweiten Schlusszeiger (T2), wobei das erste Verzeichnis (R1) ein Paar von dem ersten Kopfzeiger (H1) und dem ersten Schlusszeiger (T1) ist und das zweite Verzeichnis (R2) ein Paar von dem zweiten Kopfzeiger (H2) und dem zweiten Schlusszeiger (T2) ist, wobei die Menge der Verzeichnisse gleich zu der Menge der Vielzahl von Verbrauchsprozessen (C1, C2) ist.

10. Computerimplementiertes Verfahren (1) nach einem der Ansprüche 1 bis 8, bei welchem die verbrauchsspezifische doppelverknüpfte Liste mindestens ein Element der Warteschlange (30) umfasst, wobei die mindestens eine verbrauchsspezifische doppelverknüpfte Liste durch Modifizieren von Zeigern in der Warteschlange (30) in Abhängigkeit von den potenziellen Verbrauchsprozessen, die in Schritt (S100) identifiziert wurden, erzeugt oder erweitert wird.

11. Computerimplementiertes Verfahren (2) zum Entfernen eines Elements (E) von einer Warteschlange (30) durch einen ersten Verbrauchsprozess (C1), das Verfahren umfassend die folgenden Schritte:
Prüfen (S200), falls ein erster Schlusszeiger (T1) und/oder ein erster Kopfzeiger (H1) anzeigen, dass eine doppelverknüpfte Liste des ersten Verbrauchsprozesses (C1) nicht leer ist; und
Eliminieren (S210) des Elements (E) von der doppelverknüpften Liste des ersten Verbrauchsprozesses (C1), falls die doppelverknüpfte Liste des ersten Verbrauchsprozesses (C1) nicht leer ist, wobei das Element (E) das Element ist, auf das der erste Schlusszeiger (T1) zeigt, und das Element (E) ein Datenobjekt (D) und mindestens eine erste Verknüpfung (EL1) umfasst, umfassend einen ersten vorherigen Zeiger (EPP1) zum Zeigen auf ein erstes vorheriges Element (PE1).

12. Computerimplementiertes Verfahren (2) nach Anspruch 11, bei welchem die doppelverknüpfte Liste des ersten Verbrauchsprozesses (C1) leer ist, falls
der erste Schlusszeiger (T1) der Null-Zeiger ist oder auf das erste Verzeichnis (R1) zeigt; und/oder
der erste Kopfzeiger (H1) der Null-Zeiger ist oder auf das erste Verzeichnis (R1) zeigt, wobei das erste Verzeichnis (R1) ein Paar von dem ersten Kopfzeiger (H1) und dem ersten Schlusszeiger (T1) ist.

13. Computerimplementiertes Verfahren (2) nach einem der Ansprüche 11 und 12, bei welchem der Schritt des Eliminierens (S210) des Elements (E) ein Abrufen (S213) des Datenobjekts (D) umfasst.

14. Computerimplementiertes Verfahren (2) nach einem der Ansprüche 11 bis 13, bei welchem der Schritt des Eliminierens (S210) des Elements (E) ferner ein Freigeben (S216) des zum Speichern des Elements (E) verwendeten Platzes umfasst.

15. Computerimplementiertes Verfahren (2) nach einem der Ansprüche 11 bis 14, bei welchem der Schritt des Eliminierens (S210) des Elements (E) ferner ein Einstellen (S211) eines ersten nächsten Zeigers (PE1NP1) des ersten vorherigen Elements (PE1) auf den ersten nächsten Zeiger (ENP1) des Elements (E) umfasst, falls die doppelverknüpfte Liste des ersten Verbrauchsprozesses (C1) das erste vorherige Element (PE1) enthält.

16. Computerimplementiertes Verfahren (2) nach einem der Ansprüche 11 bis 15, bei welchem
das Element (E) ferner eine zweite Verknüpfung (EL2) umfasst, die einen zweiten vorherigen Zeiger (EPP2) zum Zeigen auf ein zweites vorheriges Element (PE2) umfasst; und
der Schritt des Eliminierens (S210) des Elements (E) ferner ein Eliminieren des Elements (E) von einer doppelverknüpften Liste des zweiten Verbrauchsprozesses (C2) umfasst durch Einstellen (S214) eines zweiten nächsten Zeigers (PE2NP2) des zweiten vorherigen Elements (PE2) auf den zweiten nächsten Zeiger (ENP2) des Elements (E), falls die doppelverknüpfte Liste des zweiten Verbrauchsprozesses (C2) das zweite vorherige Element (PE2) enthält.

17. Computerimplementiertes Verfahren (3) zur Kommunikation zwischen einem Produktionsprozess (P) und mindestens zwei Verbrauchsprozessen (C1, C2), das Verfahren (3) umfassend:
Identifizierung (S100) potenzieller Verbrauchsprozesse zum Verarbeiten eines Elements (E) durch Bestimmen mindestens eines ersten Verbrauchsprozesses (C1) von den mindestens zwei Verbrauchsprozessen (C1, C2);
Bereitstellen (S110) des Elements (E) durch Erzeugen eines Datenobjekts (D) und einer Vielzahl von Verknüpfungen, assoziiert mit dem Datenobjekt (D), wobei die Vielzahl von Verknüpfungen mindestens eine erste Verknüpfung (EL1) umfasst, wobei die erste Verknüpfung (EL1) einen ersten vorherigen Zeiger (EPP1) und einen ersten nächsten Zeiger (ENP1) umfasst, wobei die Menge von erzeugten Verknüpfungen mindestens die Menge von potenziellen Verbrauchsprozessen ist, bestimmt in Schritt (S100);
Integrieren (S120) des Elements (E) in eine Warteschlange (30) durch Erzeugen oder Erweitern einer verbrauchsspezifischen doppelverknüpften Liste für den ersten Verbrauchsprozess (C1);
Prüfen (S200), falls ein erster Schlusszeiger (T1) und/oder ein erster Kopfzeiger (H1) anzeigen, dass die doppelverknüpfte Liste des ersten Verbrauchsprozesses (C1) nicht leer ist; und
Eliminieren (S210) des Elements (E) von der doppelverknüpften Liste des ersten Verbrauchsprozesses (C1), falls die doppelverknüpfte Liste des ersten Verbrauchsprozesses (C1) nicht leer ist, wobei das Element (E) das Element ist, auf das der erste Schlusszeiger (T1) zeigt.

18. System (10) zur Kommunikation zwischen einem Produktionsprozess (P) und mindestens zwei Verbrauchsprozessen (C1, C2), das System (10) umfassend:
eine Warteschlange (30), umfassend mindestens ein erstes Verzeichnis (R1) und ein zweites Verzeichnis (R2), gespeichert in einem Speicher (35), wobei
die Menge von Verzeichnissen gleich zu der Menge von Verbrauchsprozessen ist, verbrauchend von der Warteschlange (30);
das erste Verzeichnis (R1) einen ersten Kopfzeiger (H1) und einen ersten Schlusszeiger (T1) umfasst und das zweite Verzeichnis (R2) einen zweiten Kopfzeiger (H2) und einen zweiten Schlusszeiger (T2) umfasst, wobei das erste Verzeichnis (R1) ein Paar von dem ersten Kopfzeiger (H1) und dem ersten Schlusszeiger (T1) ist und das zweite Verzeichnis (R2) ein Paar von dem zweiten Kopfzeiger (H2) und dem zweiten Schlusszeiger (T2) ist;
mindestens einen Produzenten (20), umfassend einen ersten Prozessor (25), angepasst, um den Produktionsprozess (P) nach Ansprüchen 1 bis 10 zum Hinzufügen eines Elements (E) zur Warteschlange (30) zu betreiben; und
mindestens zwei Verbraucher (40), umfassend einen zweiten Prozessor (45), angepasst, um einen ersten Verbrauchsprozess (C1) und einen zweiten Verbrauchsprozess (C2) nach Ansprüchen 11 bis 16 zum Entfernen eines Elements (E) von der Warteschlange (30) zu betreiben.

19. Verwendung der Verfahren (1) und/oder (2) und/oder (3) nach einem der Ansprüche 1-17 für mindestens eines von Streaming-Analytics und Echtzeit-Big-Data-Analytics.

20. Datenverarbeitungssystem umfassend Mittel zum Ausführen der Verfahren (1) und/oder (2) und/oder (3) nach einem der Ansprüche 1-17.

21. Computerprogramm umfassend Anweisungen, die, wenn das Programm von einem Computer ausgeführt wird, den Computer veranlassen, die Verfahren (1) und/oder (2) und/oder (3) nach einem der Ansprüche 1-17 auszuführen.

22. Computerlesbares Medium umfassend Anweisungen, die, wenn von einem Computer ausgeführt werden, den Computer veranlassen, die Verfahren (1) und/oder (2) und/oder (3) nach einem der Ansprüche 1-17 auszuführen.

## Revendications

1. Procédé mis en oeuvre par ordinateur (1) pour ajouter un élément (E) à une file d'attente (30) par un processus de production (P), le procédé comprenant les étapes suivantes :
identifier (S100) des processus de consommation potentiels pour traiter l'élément (E) en déterminant au moins un premier processus de consommation (C1) parmi une pluralité de processus de consommation (C1, C2) ;
fournir (S110) l'élément (E) en créant un élément de données (D) et une pluralité de liens associés avec l'élément de données (D), la pluralité de liens comprenant au moins un premier lien (EL1), le premier lien (EL1) comprenant un premier pointeur précédent (EPP1) et un premier pointeur suivant (ENP1), dans lequel la quantité de liens créés est au moins égale à la quantité de processus de consommation potentiels déterminée à l'étape (S100) ; et
intégrer (S 120) l'élément (E) dans la file d'attente (30) en créant ou en étendant une liste doublement chaînée spécifique à un consommateur pour le premier processus de consommation (C1).

2. Procédé mis en oeuvre par ordinateur (1) selon la revendication 1, dans lequel l'étape d'intégration (S120) de l'élément (E) comprend les étapes suivantes :
régler (S121) le premier pointeur suivant (ENP1) à la même valeur qu'un premier pointeur de tête (H1) d'une première racine (R1) de la file d'attente (30), si un premier pointeur de queue (T1) et/ou le premier pointeur de tête (H1) indique que la liste doublement chaînée du premier processus de consommation (C1) n'est pas vide, dans lequel la première racine (R1) est une paire du premier pointeur de tête (H1) et du premier pointeur de queue (T1) ;
régler (S122) le premier pointeur de tête (H1) à un état qui indique que l'élément (E) est la tête de la liste doublement chaînée du premier processus de consommation (C1) ;
régler (S123) le premier pointeur précédent (EPP1) à une valeur indiquant que l'élément (E) est la tête de la liste, si le premier pointeur de queue (T1) ou le premier pointeur de tête (H1) indique que la liste doublement chaînée du premier processus de consommation (C1) n'est pas vide ; et
régler (S124) un premier pointeur de queue (T1) de la première racine (R1) à un état qui indique que l'élément (E) est la queue de la liste doublement chaînée du premier processus de consommation (C1), si le premier pointeur de queue (T1) et/ou le premier pointeur de tête (H1) indique que la liste doublement chaînée du premier processus de consommation (C1) est vide.

3. Procédé mis en oeuvre par ordinateur (1) selon la revendication 2, dans lequel le premier pointeur précédent (EPP1) est défini sur le pointeur nul ou sur la première racine (R1).

4. Procédé mis en oeuvre par ordinateur (1) selon les revendications 2 ou 3, dans lequel la liste doublement chaînée du premier processus de consommation (C1) est vide si
le premier pointeur de queue (T1) est le pointeur nul ou pointe vers la première racine (R1), et/ou
le premier pointeur de tête (H1) est le pointeur nul ou pointe vers la première racine (R1).

5. Procédé mis en oeuvre par ordinateur (1) selon les revendications 1 à 3, dans lequel
l'étape d'identification (S100) de processus de consommation potentiels comprend en outre déterminer au moins un deuxième processus de consommation (C2) parmi une pluralité de processus de consommation (C1, C2) ;
la pluralité des liens créés comprend en outre au moins un deuxième lien (EL2), comprenant un deuxième pointeur précédent (EPP2) et un deuxième pointeur suivant (ENP2) ; et
l'étape d'intégration (S 120) de l'élément (E) comprend intégrer l'élément (E) dans la file d'attente (30) en créant ou en étendant une liste doublement chaînée spécifique à un consommateur pour le deuxième processus de consommation (C2) par les étapes de
régler (S125) le deuxième pointeur suivant (ENP2) à la même valeur qu'un deuxième pointeur de tête (H2) d'une deuxième racine (R2) de la file d'attente (30), si un deuxième pointeur de queue (T2) ou le deuxième pointeur de tête (H2) indique que la liste doublement chaînée du deuxième processus de consommation (C2) n'est pas vide, dans lequel la deuxième racine (R2) est une paire du deuxième pointeur de tête (H2) et du deuxième pointeur de queue (T2) ;
régler (S126) le deuxième pointeur de tête (H2) à un état qui indique que l'élément (E) est la tête de la liste doublement chaînée du deuxième processus de consommation (C2) ;
régler (S127) le deuxième pointeur précédent (EPP2) à une valeur indiquant que l'élément (E) est la tête de la liste, si le deuxième pointeur de queue (T2) ou le deuxième pointeur de tête (H2) indique que la liste doublement chaînée du deuxième procédé de consommation (C2) n'est pas vide ; et
régler (S128) un deuxième pointeur de queue (T2) de la deuxième racine (R2) à un état qui indique que l'élément (E) est la queue de la liste doublement chaînée du deuxième processus de consommation (C2), si le deuxième pointeur de queue (T2) ou le deuxième pointeur de tête (H2) indique que la liste doublement chaînée du deuxième processus de consommation (C2) est vide.

6. Procédé mis en oeuvre par ordinateur (1) selon la revendication 5, dans lequel la liste doublement chaînée du deuxième processus de consommation (C2) est vide si
le deuxième pointeur de queue (T2) est le pointeur nul ou pointe vers la deuxième racine (R2), et/ou
le deuxième pointeur de tête (H2) est le pointeur nul ou pointe vers la deuxième racine (R2).

7. Procédé mis en oeuvre par ordinateur (1) selon les revendications 1 à 6, comprenant en outre :
verrouiller (S130) un mutex (M) avant de réaliser l'étape d'intégration (S120) de l'élément (E) ; et
déverrouiller (S135) le mutex (M) après avoir terminé l'étape d'intégration (S120) de l'élément (E).

8. Procédé mis en oeuvre par ordinateur (1) selon les revendications 1 à 7, comprenant en outre :
réveiller (S140) des processus de consommation inactifs en utilisant une variable de condition après avoir terminé l'étape d'intégration (S120) de l'élément (E).

9. Procédé mis en oeuvre par ordinateur (1) selon les revendications 1 à 8, comprenant en outre :
créer (S10) une file d'attente valide, vide (30) en créant une première racine (R1) comprenant un premier pointeur de tête (H1) et un premier pointeur de queue (T1) et une deuxième racine (R2) comprenant un deuxième pointeur de tête (H2) et un deuxième pointeur de queue (T2), dans lequel la première racine (R1) est une paire du premier pointeur de tête (H1) et du premier pointeur de queue (T1) et la deuxième racine (R2) est une paire du deuxième pointeur de tête (H2) et du deuxième pointeur de queue (T2), dans lequel la quantité de racines est égale à la quantité de processus de consommation (C1, C2).

10. Procédé mis en oeuvre par ordinateur (1) selon les revendications 1 à 8, dans lequel la liste doublement chaînée spécifique à un consommateur comprend au moins un élément de la file d'attente (30), dans lequel la au moins une liste doublement chaînée spécifique au consommateur est créée ou étendue en modifiant des pointeurs dans la file d'attente (30) en fonction des processus de consommation potentiels qui ont été identifiés à l'étape (S100).

11. Procédé mis en oeuvre par ordinateur (2) pour retirer un élément (E) d'une file d'attente (30) par un premier processus de consommation (C1), le procédé comprenant les étapes de :
vérifier (S200) si un premier pointeur de queue (T1) et/ou un premier pointeur de tête (H1) indique qu'une liste doublement chaînée du premier processus de consommation (C1) n'est pas vide ; et
éliminer (S210) l'élément (E) de la liste doublement chaînée du premier processus de consommation (C1) si la liste doublement chaînée du premier processus de consommation (C1) n'est pas vide, dans lequel un élément (E) est l'élément vers lequel le premier pointeur de queue (T1) pointe et l'élément (E) comprend un élément de données (D) et au moins un premier lien (EL1), comprenant un premier pointeur précédent (EPP1) pour pointer vers un premier élément précédent (PE1).

12. Procédé mis en oeuvre par ordinateur (2) selon la revendication 11, dans lequel la liste doublement chaînée du premier processus de consommation (C1) est vide si
le premier pointeur de queue (T1) est le pointeur nul ou pointe vers la première racine (R1) ;
et/ou
le premier pointeur de tête (H1) est le pointeur nul ou pointe vers la première racine (R1), dans lequel la première racine (R1) est une paire du premier pointeur de tête (H1) et du premier pointeur de queue (T1).

13. Procédé mis en oeuvre par ordinateur (2) selon les revendications 11 et 12, dans lequel l'étape d'élimination (S210) de l'élément (E) comprend la récupération (S213) de l'élément de données (D).

14. Procédé mis en oeuvre par ordinateur (2) selon les revendications 11 à 13, dans lequel l'étape d'élimination (S210) de l'élément (E) comprend en outre libérer (S216) de l'espace utilisé pour stocker l'élément (E).

15. Procédé mis en oeuvre par ordinateur (2) selon les revendications 11 à 14, dans lequel l'étape d'élimination (S210) de l'élément (E) comprend en outre régler (S211) un premier pointeur suivant (PE1NP1) du premier élément précédent (PE1) au premier pointeur suivant (ENP1) de l'élément (E), si la liste doublement chaînée du premier processus de consommation (C1) contient le premier élément précédent (PE1).

16. Procédé mis en oeuvre par ordinateur (2) selon les revendications 11 à 15, dans lequel
l'élément (E) comprend en outre un deuxième lien (EL2), comprenant un deuxième pointeur précédent (EPP2) pour pointer vers un deuxième élément précédent (PE2) ; et
l'étape d'élimination (S210) de l'élément (E) comprend en outre éliminer l'élément (E) d'une liste doublement chaînée du deuxième processus de consommation (C2) en réglant (S214) un deuxième pointeur suivant (PE2NP2) du deuxième élément précédent (PE2) au deuxième pointeur suivant (ENP2) de l'élément (E), si la liste doublement chaînée du deuxième processus de consommation (C2) contient le deuxième élément précédent (PE2).

17. Procédé mis en oeuvre par ordinateur (3) pour la communication entre un processus de production (P) et au moins deux processus de consommation (C1, C2), le procédé (3) comprenant :
identifier (S100) des processus de consommation potentiels pour le traitement d'un élément (E) en déterminant au moins un premier processus de consommation (C1) parmi lesdits au moins deux processus de consommation (C1, C2);
fournir (S110) l'élément (E) en créant un élément de données (D) et une pluralité de liens associés avec l'élément de données (D), la pluralité de liens comprenant au moins un premier lien (EL1), le premier lien (EL1) comprenant un premier pointeur précédent (EPP1) et un premier pointeur suivant (ENP1), la quantité de liens créés étant au moins égale à la quantité de processus de consommation potentiels déterminée à l'étape (S100) ;
intégrer (S120) l'élément (E) dans une file d'attente (30) en créant ou en étendant une liste doublement chaînée spécifique à un consommateur pour le premier processus de consommation (C1) ;
vérifier (S200) si un premier pointeur de queue (T1) et/ou un premier pointeur de tête (H1) indique que la liste doublement chaînée du premier processus de consommation (C1) n'est pas vide ;
et
éliminer (S210) l'élément (E) de la liste doublement chaînée du premier processus de consommation (C1) si la liste doublement chaînée du premier processus de consommation (C1) n'est pas vide, l'élément (E) étant l'élément vers lequel le premier pointeur de queue (T1) pointe.

18. Système (10) pour la communication entre un processus de production (P) et au moins deux processus de consommation (C1, C2), le système (10) comprenant :
une file d'attente (30) comprenant au moins une première racine (R1) et une deuxième racine (R2) stockées dans une mémoire (35), dans lequel
la quantité de racines est égale à la quantité de processus de consommation consommant de la file d'attente (30);
la première racine (R1) comprend un premier pointeur de tête (H1) et un premier pointeur de queue (T1) et la deuxième racine (R2) comprend un deuxième pointeur de tête (H2) et un deuxième pointeur de queue (T2), dans lequel la première racine (R1) est une paire du premier pointeur de tête (H1) et du premier pointeur de queue (T1) et la deuxième racine (R2) est une paire du deuxième pointeur de tête (H2) et du deuxième pointeur de queue (T2) ;
au moins un producteur (20) comprenant un premier processeur (25) adapté pour exécuter le procédé de production (P) selon les revendications 1 à 10 pour ajouter un élément (E) à la file d'attente (30) ; et
au moins deux consommateurs (40) comprenant un deuxième processeur (45) adapté pour exécuter un premier procédé de consommation (C1) et un deuxième procédé de consommation (C2) selon les revendications 11 à 16 pour retirer un élément (E) de la file d'attente (30).

19. Utilisation des procédés (1) et/ou (2) et/ou (3) selon l'une quelconque des revendications 1 à 17 pour au moins une parmi des analyses de flux et des analyses de mégadonnées en temps réel.

20. Système de traitement de données comprenant des moyens pour mettre en oeuvre les procédés (1) et/ou (2) et/ou (3) selon l'une quelconque des revendications 1 à 17.

21. Programme d'ordinateur comprenant des instructions qui, lorsque le programme est exécuté par un ordinateur, entraînent l'ordinateur à mettre en oeuvre les procédés (1) et/ou (2) et/ou (3) selon l'une quelconque des revendications 1 à 17.

22. Support lisible par ordinateur comprenant des instructions qui, lorsqu'elles sont exécutées par un ordinateur, entraînent l'ordinateur à mettre en oeuvre les procédés (1) et/ou (2) et/ou (3) selon l'une quelconque des revendications 1 à 17.
